# EUROPÄISCHE PATENTANMELDUNG

(11) **EP 0 763 669 A1**
(43) Veröffentlichungstag der Anmeldung: **19.03.1997**
(21) Anmeldenummer: 95120218.3
(22) Anmeldetag: 20.12.1995
(51) Int. Cl.: F16D 66/02, F16D 65/097

(54) **Bremsbacke für Scheibenbremsen mit akustischer Warnvorrichtung**

(30) Priorität: 18.09.1995 DE 29514802 U
(71) Anmelder: TEXTAR GmbH, D-51375 Leverkusen (DE)
(72) Erfinder: Foss, Peter, D-53175 Bonn (DE)

(57) **Zusammenfassung**

Bei bekannten akustischen Verschleißanzeigervorrichtungen, die auf der reibbelagabgewandten Seite der Trägerplatte befestigt sind, erstrecken sich die schallerzeugenden Federzungen axial am Belagrand vorbei zur Bremsscheibe.
Nach Erreichen des Verschleißmaßes kommt die Federzunge mit der Bremsscheibe in Kontakt und erzeugt das Warngeräusch. Die Zunge muß dabei aufwendig vom Befestigungspunkt des Verschleißanzeigers zum Rand geführt werden. In der Bremsbackenaufnahme sind entsprechende Ausnehmungen zu berücksichtigen.
Die neue Anordnung soll zusätzliche Öffnungen und Durchlässe am Bremsgehäuse oder der Belagaufnahme vermeiden, so daß auch die Nachrüstung jedes Belages ohne Anpassung an die Bremse möglich ist.
Der Verschleißanzeiger (4) ist dazu zentral auf der Trägerplatte (2) innerhalb der Wirkflächen des hohlen Bremskolbens (8) angeordnet. Die Federzunge (12) wird durch eine zentrale Aussparung (13) durch die Trägerplatte (2) geführt.
Die Anordnung ermöglicht eine Aus- und Nachrüstung eines Belages mit einem akustischen Verschleißanzeiger, unabhängig von der Belaggeometrie und der Konstruktion des Belagschachtes. Damit kann eine solche Anordnung an Bremsbacken für Scheibenbremsen aller Art Verwendung finden.

## Beschreibung

Die Neuerung betrifft eine Bremsbacke für Scheibenbremsen, bestehend aus einer einen Reibbelag tragenden Trägerplatte mit einer akustischen Warnvorrichtung zum Hinweis auf das Erreichen der zulässigen Verschleißgrenze der Bremsbacke mit einem Schwingungselement, das einen Warnlaut erzeugt wenn der Endabschnitt mit Blattfederstruktur mit der Bremsscheibe in Kontakt gelangt, welche auf der dem Reibbelag abgekehrten Seite der Trägerplatte befestigt ist, wobei diese Anordnung auch mit einer Haltefeder kombiniert sein kann.

Bremsbacken für Scheibenbremsen, die mit akustischen Verschleißanzeigerelementen ausgerüstet sind, wobei ein Federelement bei Erreichen des Verschleißmaßes mit der Bremsscheibe in Berührung kommt und dadurch hörbare Schwingungen angeregt werden, die den Fahrer auf den Zustand der Beläge hinweisen sollen, sind bereits allgemein bekannt.
In der EP-OS 0 596 761 ist eine solche akustische Warnvorrichtung beschrieben, die auf der reibbelagabgewandten Seite am Randbereich der Trägerplatte befestigt ist. Die Geräusche werden von einer Federzunge erzeugt, die sich ausgehend von der Befestigung an der Trägerplatte am Belagrand vorbei zur Bremsscheibe erstreckt. Bei verschlissenen Belägen kommt die Federzunge mit der Bremsscheibe in Kontakt und erzeugt ein Geräusch. Die Warnvorrichtung ist auf der Trägerplatte fest vernietet.

Diese Vorrichtung hat den Nachteil, daß die Federzunge in Richtung Bremsscheibe am Trägerplattenrand vorbeigeführt wird. Dazu ist in der Bremse eine Ausnehmung vorzusehen. Insbesondere bei den allgemein üblichen geringen Spaltabständen und Spalttoleranzen können ohne entsprechend vorgesehene Aussparungen solche Verschleißanzeiger nicht nachgerüstet bzw. eingesetzt werden. Durch diese Aussparungen werden zusätzliche Kosten verursacht. Des weiteren muß zum Einsatz eines entsprechenden akustischen Verschleißanzeigers genügend Einbauraum im Bremsgehäuse vorhanden sein, damit der sich senkrecht zur Trägerplatte erstreckende Blechstreifen mit einem anschließenden schlaufenförmigen Abschnitt keine Berührungspunkte mit dem Bremsgehäuse hat.

Der Neuerung liegt somit die Aufgabe zugrunde die Anordnung eines akustischen Verschleißanzeigers mit Federspange dahingehend zu verbessern, daß am Bremsengehäuse keine zusätzlichen Ausnehmungen und Öffnungen vorgesehen werden müssen und eine Nachrüstung aller Bremsen mit akustischen Verschleißanzeigern ohne konstruktive Änderung der Bremsengehäuse zu ermöglichen.

Die Aufgabe wird erfindungsgemäß dadurch gelöst, daß das Verschleißanzeigerelement in Form eines Blechstreifens zentral auf der Trägerplatte innerhalb der Wirkflächen des hohlen Bremskolbens angeordnet ist und der Endabschnitt in diesem Bereich durch eine Aussparung in der Trägerplatte in eine Ausnehmung des Reibbelages ragt.

Mit der Erfindung wird erreicht, daß am Bremsengehäuse keine zusätzlich Aussparung vorgesehen werden muß, um die Federzunge am Belag vorbeiführen zu können. Die Spalte zwischen Trägerplatte und den Belagführungen können gering gehalten werden. Die Herstellkosten der Bremsgehäuse werden verringert.
Konstruktiv ist eine Nachrüstung eines Belagtyps jederzeit möglich, ohne auf die Bremsenkonstruktion Rücksicht nehmen zu müssen. Da sich die Veränderungen nur auf die Bremsbacke beziehen, können bereits in Serie gegangene Bremsen mit derartigen Verschleißanzeigern jederzeit nachgerüstet werden.
Die Anordnung ist von der Geometrie der Bremsbacke unabhängig, sofern hohle Bremskolben, die mittlerweile allgemein üblich sind , eingesetzt werden, so daß sich die Neuerung bei nahezu jedem Bremsentyp einsetzen läßt.

Vorzugsweise sieht die Erfindung weiterhin vor, daß bei Vorhandensein einer zentral angeordneten Haltefeder, die ihre Wirkung im hohlen Bremskolben entfalten soll, das Verschleißanzeigerelement und die Haltefeder einteilig ausgeführt sind, wobei das Verschleißanzeigerelement innerhalb der Wirkflächen des hohlen Bremskolbens angeordnet ist und der Endabschnitt in diesem Bereich durch eine Aussparung in der Trägerplatte in eine Ausnehmung des Reibbelages ragt.

Durch diese Maßnahme wird ein Montagevorgang eingespart. Da Haltefeder und das Verschleißanzeigerelement einteilig sind, ist mit der Befestigung der Haltefeder auch das Verschleißanzeigerelement genügend justiert.

Vorzugsweise ist vorgesehen, daß sich das Verschleißanzeigerelement senkrecht von der Trägerplatte weg erstreckt und nach einem schlaufenförmigen Abschnitt entgegengesetzt in die Trägerplattenausnehmung geführt ist , so daß die Blechschlaufe im montierten Zustand in den hohlen Bremskolben ragt.

Vorzugsweise sieht die Erfindung weiterhin von, daß das Verschleißanzeigerelement oder das einteilige Haltefeder- / Verschleißanzeigerelement mit der Trägerplatte vernietet werden.

Vorzugsweise ist vorgesehen, daß die Aussparung sich nicht durch den gesamten Reibbelag erstreckt, so daß der Reibflächenverlust aufgrund der Ausnehmung zumindest bis zum Erreichen der Verschleißgrenze vermieden wird.

Ausführungsbeispiele der Erfindung werden nachfolgend anhand der Zeichnungen näher erläutert.

Es zeigen:
- Fig. 1: eine Ansicht einer Bremsbacke auf die Reibbelag angewandte Seite der Trägerplatte mit montiertem Verschleißanzeiger.
- Fig. 2: eine Darstellung der Fig. 1 im Schnitt aus Richtung A
- Fig. 3: eine Darstellung einer Bremsbacke wie in Fig.1 mit einer Verschleißanzeiger-Haltefederkombination.
- Fig. 4: eine Darstellung der Fig. 3 im Schnitt aus Richtung B

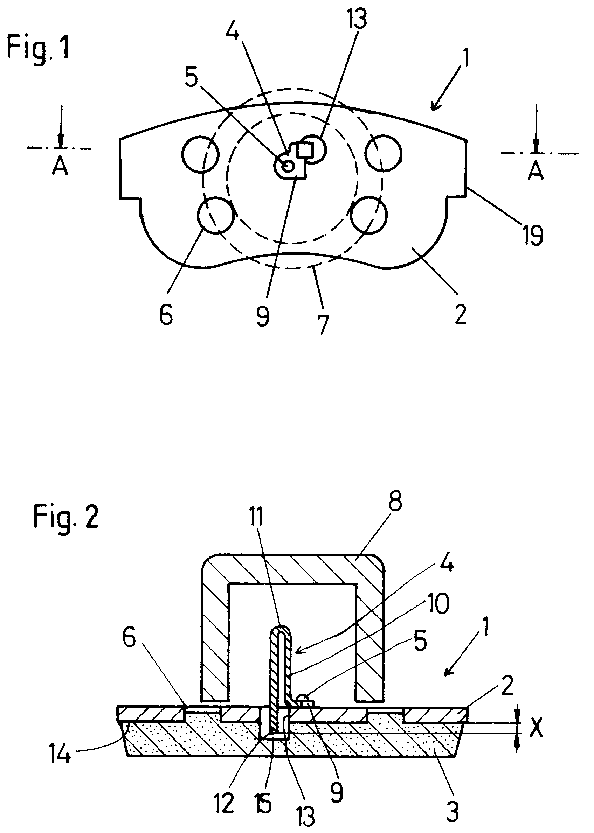

Die in Fig. 1 dargestellte Bremsbacke 1 besteht im einzelnen aus einer Trägerplatte 2 einem Reibbelag 3 und einem Verschleißanzeigerelement 4, das mittels eines Nietes 5 auf der dem Reibbelag abgewandten Seite der Trägerplatte 2 formschlüssig befestigt ist.

Die Trägerplatte 2 weist Verankerungslöcher 6 auf, in die das Reibmaterial 3 mit eingepreßt ist. Dadurch wird eine formschlüssige Verbindung zwischen der Trägerplatte 2 und dem Reibbelag 3 erreicht.
Der Wirkbereich 7 des Bremskolbens 8, d.h. der Bereich an dem die Kolbenflächen eines hohlen Bremskolbens auf der Trägerplatte 2 während des Bremsvorganges anliegen, ist zentral zur Trägerplatte 2 angeordnet.
In der Regel sind solche Bremskolben 8 zur Gewichtsersparnis hohl ausgebildet, außerdem nehmen diese Bremskolben 8 etwaige Kolbenhaltefedern der Bremsbacken auf, die dazu dienen die Bremsbacke nach dem Bremsvorgang von der Bremsscheibe wegzuziehen.
Das Verschleißanzeigerelement ist innerhalb des Wirkbereiches 7 des Bremskolbens 8 angeordnet.
Der dargestellte Belag läßt sich nur kolbenseitig in eine Bremse einbauen, so daß an einem Bremssattel zumindest eine Bremsbacke mit einem Verschleißanzeiger im Einsatz ist. Bei Festsattelbremsen, an denen zwei Kolben wirken, können zwei derartige Bremsbacken montiert sein.

Der Verschleißanzeigerkörper 4, wie im in Fig. 2 gezeigten Querschnitt dargestellt, weist eine Blattfederstruktur auf . An einem Ende ist die Grundplatte 9 mittels eines Nietes 5 auf der Trägerplatte 2 befestigt. Von der Grundplatte 9 erstreckt sich eine Federspange 10 senkrecht von der Trägerplatte 2 weg, um nach eine Schleife 11 wieder in Richtung Trägerplatte 2 geführt zu werden, wobei das zweite Ende, die Federzunge 12, durch eine Aussparung 13 in der Trägerplatte 2 hindurch ragt, um um das Maß X die reibbelagseitige Trägerplattenebene 14 zu überragen.
Das Maß X ist das minimale Verschleißmaß, auf das ein Reibbelag 3 abgefahren werden darf.
Sofern dieses Verschleißmaß X im Fahrbetrieb erreicht wird , kommt die Federzunge 12 mit der Bremsscheibe in Kontakt. Dadurch wird die gesamte Federspange 10 zu Schwingungen angeregt , die ein hörbares Geräusch erzeugen und den Fahrer des Kraftfahrzeuges auf den Zustand der Bremsbacken hinweisen.
Im Reibbelag 3 ist zur Aufnahme der Federzunge ein Sackloch 15 angebracht, so daß das Verschleißanzeigerelement 4 einfach auf einen fertiggepreßten Belag montiert werden kann. Durch die Vermeidung einer Durchgangsbohrung kann die Reibfläche trotz Einsatz eines Verschleißanzeigers konstant gehalten werden.

Durch die Lage des Verschleißanzeigerelementes innerhalb des Wirkbereiches 7 des Bremskolbens 8 kann eine Bremsbacke jederzeit mit einem entsprechenden akustischen Verschleißanzeiger nachgerüstet werden, ohne daß das Bremsgehäuse konstruktiv geändert werden muß. Meist ist dies ohnehin nicht möglich, da die Seitenflächen 19 der Trägerplatte zumeist als definierte Führungsflächen gestaltet sind. Die Nach- bzw. Ausrüstung ist unabhängig von der Bremsbackengeometrie und somit in jede bereits auf dem Markt befindliche Bremse möglich.

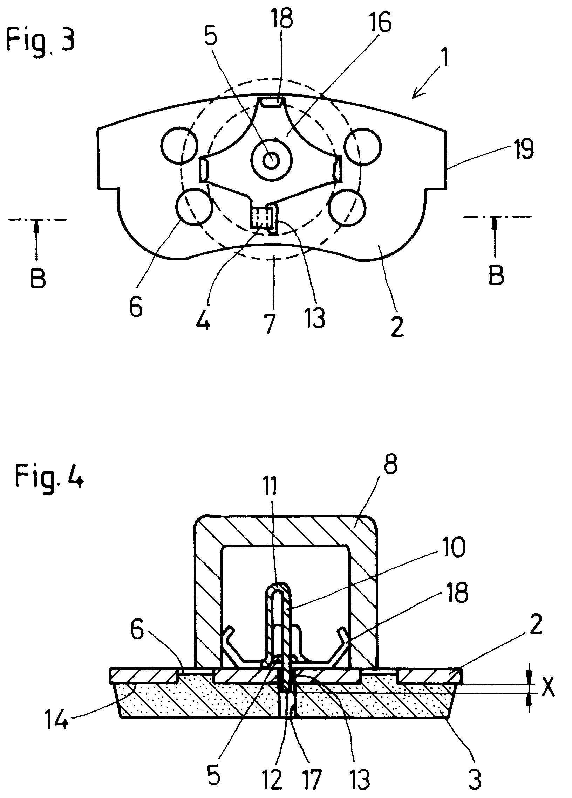

Fig. 3 zeigt eine Bremsbacke wie in Fig. 1, jedoch ist diese mit einer Kolbenhaltefeder 16 ausgestattet, die mit einem Verschleißanzeigerelement 4 kombiniert ist, d.h. Kolbenhaltefeder 16 und akustischer Verschleißanzeiger 4 sind einteilig ausgeführt.
Da beide Elemente vorzugsweise aus Federstahl hergestellt werden, ist eine Kombination fertigungstechnisch ohne Probleme herstellbar.
In der dargestellten Ausführungsform ist die Aussparung 13 in der Trägerplatte 2 nicht kreisförmig, sondern dem Federblech angepaßt, länglich geformt.

Fig. 4 zeigt eine Ansicht zu der Darstellung in Fig. 3 im Querschnitt . Die Aussparung 17 setzt sich als Durchgangsausnehmung 17 im Reibbelag fort. Der Bremskolben 8 wird in angelegtem Zustand gezeigt, wie er bei vorhandener Kolbenhaltefeder üblich ist. Dabei stützen sich die Federarme 18 an der Innenwand des Bremskolbens 8 ab.

## Patentansprüche

1. Bremsbacke für Scheibenbremsen, bestehend aus einer einen Reibbelag (3) tragenden Trägerplatte (2) mit einer akustischen Warnvorrichtung zum Hinweis auf das Erreichen der zulässigen Verschleißgrenze der Bremsbacke (1) mit einem Schwingungselement, das einen Warnlaut erzeugt wenn der Endabschnitt mit Blattfederstruktur mit der Bremsscheibe in Kontakt gelangt, welche auf der dem Reibbelag (1) abgekehrten Seite der Trägerplatte (2) befestigt ist, dadurch gekennzeichnet, daß das Verschleißanzeigerelement (4) in Form eines Blechstreifens zentral auf der Trägerplatte (2) innerhalb der Wirkflächen (7) des hohlen Bremskolbens (8) angeordnet ist und der Endabschnitt (12) in diesem Bereich durch eine Aussparung (13) in der Trägerplatte (2) in eine Ausnehmung (15,17) des Reibbelags (3) ragt.

2. Bremsbacke für Scheibenbremsen, bestehend aus einer einen Reibbelag tragenden Trägerplatte (2) mit einer zentral angeordneten Haltefeder (16) aus Federblech sowie einer akustischen Warnvorrichtung zum Hinweis auf das Erreichen der zulässigen Verschleißgrenze der Bremsbacke (1) mit einem Schwingungselement, das einen Warnlaut erzeugt wenn der Endabschnitt mit Blattfederstruktur mit der Bremsscheibe in Kontakt gelangt, welche beide auf der dem Reibbelag abgekehrten Seite der Trägerplatte (2) befestigt sind, dadurch gekennzeichnet, daß das Verschleißanzeigerelement (4) und die Haltefeder (16) einteilig ausgeführt sind, wobei das Verschleißanzeigerelement innerhalb der Wirkflächen (7) des hohlen Bremskolbens (8) angeordnet ist und der Endabschnitt (12) in diesem Bereich durch eine Aussparung (13) in der Trägerplatte (2) in eine Ausnehmung (15,17) des Reibbelages (3) ragt.

3. Bremsbacke nach Anspruch 1 oder 2 dadurch gekennzeichnet, daß sich das Verschleißanzeigerelement (4) senkrecht von der Trägerplatte (2) weg erstreckt und nach einem schlaufenförmigen Abschnitt (11) entgegengesetzt in die Trägerplattenaussparung (13) geführt ist, so daß der federnde Blechstreifen (12) im montierten Zustand in den hohlen Bremskolben (8) ragt.

4. Bremsbacke nach Anspruch 1 ,dadurch gekennzeichnet, daß das Verschleißanzeigerelement (4) mit der Trägerplatte (2) vernietet ist.

5. Bremsbacke nach Anspruch 2 , dadurch gekennzeichnet, daß die Haltefeder (16) mit Verschleißanzeigerelement (4) mit der Trägerplatte (2) vernietet ist.

6. Bremsbacke nach einem der vorhergehenden Ansprüche, dadurch gekennzeichnet, daß die Ausnehmung (17) sich durch den gesamten Reibbelag (3) erstreckt.
